# EUROPÄISCHE PATENTSCHRIFT

(11) **EP 3 111 814 B1**
(45) Veröffentlichungstag und Bekanntmachung des Hinweises auf die Patenterteilung: **03.01.2018**
(21) Anmeldenummer: 15175080.9
(22) Anmeldetag: 02.07.2015
(51) Int. Cl.: A47J 41/00, B05B 7/24, B65D 81/38

(54) **VORRICHTUNG ZUM AUSTRAGEN VON FLUIDEN**
DEVICE FOR APPLYING FLUIDS
DISPOSITIF DE DISTRIBUTION DE FLUIDES

(43) Veröffentlichungstag der Anmeldung: 04.01.2017
(73) Patentinhaber: iSi GmbH, 1217 Wien (AT)
(72) Erfinder: Pochtler, Christian C., 1190 Wien (AT)
(74) Vertreter: KLIMENT & HENHAPEL

(56) Entgegenhaltungen:
- EP-A1- 2 377 622
- WO-A1-00/67628
- US-A- 5 443 186

## Beschreibung

### GEBIET DER ERFINDUNG

Die vorliegende Erfindung betrifft eine Vorrichtung zum Austragen von Fluiden, die Vorrichtung umfassend: ein zu öffnendes und zu verschließendes Behältnis, welches einen Geräteinnenraum zur Aufnahme eines Sprühmediums ausbildet; Kapselverbindungsmittel, um eine fluidische Verbindung zwischen einer auswechselbaren, mit Gas gefüllten Kapsel und der Vorrichtung herzustellen; eine Austragungsöffnung, durch welche das Sprühmedium bei Betätigung der Vorrichtung aus dem Geräteinnenraum austragbar ist, wobei ein Druckregler vorgesehen ist, um das Austragen des Sprühmediums mit gleichmäßigem Druck zu gewährleisten.

### STAND DER TECHNIK

Dahingehend offenbart die AT 411171 B einen Behälter zum Erzeugen, Aufbewahren und Ausgeben von in einem Geräteinnenraum sich befindlichen cremeförmigen Lebensmittel, insbesondere Schlagsahne sowie warmen, aufgeschäumten und saucenförmigen Lebensmitteln, wobei der Behälter sich aus einer Flasche und einem Kopf zusammensetzt. Dabei wird die Flasche zu Beginn mit dem jeweiligen zu versprühenden Lebensmittel befüllt und im Anschluss mit dem Kopf verschlossen. Das Lebensmittel bzw. zu versprühende Medium liegt dabei in flüssiger Form in der Flasche vor. Durch Einbringung eines Gases, vorzugsweise N₂O oder CO₂, aus einer Kapsel in den Geräteinnenraum steigt der Druck im Geräteinnenraum derart, dass die Gasteilchen im Lebensmittel gelöst werden. Bei Entnahme bzw. beim Versprühen expandiert das gelöste Gas. Hierdurch kann es zu einem Aufschäumen des Lebensmittel kommen bzw. zu einem Überführen des Lebensmittels in einen cremeförmigen bzw. schaum- oder saucenförmigen Zustand.

Dabei ergibt sich das Problem, dass beim Ausgeben der cremeförmigen Lebensmittel aus der Flasche durch eine Austragungsbohrung der Ausgabedruck derart abfällt, dass kein gleichmäßiger Auftrag der Creme, beispielsweise auf Backwaren, möglich ist.

Aufgrund dieses Problems muss der Anwender speziell im Bereich der Patisserie, Küche und Catering öfters Nachbesserungen der Schichtdicke durchführen, wobei sich etwaige Unregelmäßigkeiten nur schwer vermeiden lassen.

Alternativlösungen, bei denen dem Geräteinnenraum das Gas mittels eines Druckschlauchs von außen zugeführt wird, um einen konstanten Gasdruck sicherzustellen, sind insofern als nachteilig zu werten, als die Handlichkeit solcher Vorrichtungen sowie die örtliche Flexibilität des Einsatzes solcher Vorrichtung aufgrund des notwendigen externen Druckschlauchs zur Gasversorgung deutlich beschränkt sind.

Aus der WO 00/67628 A1 ist eine Vorrichtung zur Abgabe von in einem Behälter angeordneter Flüssigseife bekannt. Eine Kartusche ist vorgesehen, die ein unter hohem Druck stehendes Fluid, z.B. CO2, enthält, das in gasförmigem Zustand in den Behälter geleitet wird, um die Flüssigseife bei Bedarf aus dem Behälter und schließlich durch ein Austrittselement hinausdrücken zu können. Um einen konstanten Druck im Behälter sicherzustellen, der deutlich geringer ist als jener in der Kartusche, ist ein Druckregler vorgesehen, durch den das Fluid aus der Kartusche in den Behälter fließen muss.

### AUFGABE DER ERFINDUNG

Es ist daher eine Aufgabe der Erfindung, eine Vorrichtung zu schaffen, durch welche eine Creme, beispielsweise aus Gelee, Aspik, Ei, Schokolade und dgl., gleichmäßig aufgetragen werden kann, wobei die Handlichkeit und örtliche Flexibilität des Einsatzes der Vorrichtung größtmöglich sein sollen.

### DARSTELLUNG DER ERFINDUNG

Um die genannte Aufgabe zu lösen, ist eine Vorrichtung gemäß des Anspruchs 1 vorgesehen. Somit wird eine kompakte Vorrichtung erreicht, wobei keine externen Mittel zur Generierung eines Drucks, der das gleichmäßige Austragen ermöglicht, benötigt werden. Es ergibt sich somit ein äußerst breites Anwendungsspektrum im Patisserie-, Küchenals auch Cateringbereich zum Versprühen von Lebensmitteln. Indem das Behältnis geöffnet und wieder verschlossen werden kann, kann das Medium, das versprüht werden soll, problemlos im Geräteinnenraum angeordnet werden. Um das Öffnen und Verschließen des Behältnisses zu ermöglichen, ist das Behältnis in einer typischen Ausführungsform der erfindungsgemäßen Vorrichtung aus einer Flasche und einem Kopf, der mit der Flasche verbunden, vorzugsweise verschraubt werden kann, aufgebaut. D.h. im zusammengefügten Zustand bilden die Flasche und der Kopf den Geräteinnenraum aus. Es sind aber selbstverständlich auch andere Ausführungen denkbar, beispielsweise ein Behältnis mit einer seitlichen Öffnung, die wiederverschließbar ist.

Beim Sprühmedium handelt es sich um das auszutragende Fluid, insbesondere um ein Lebensmittel. Das Sprühmedium kann mit dem Medium identisch sein, es kann aber auch aus dem Medium und dem Gas gebildet sein.

Als Kapselverbindungsmittel können z.B. ein an sich bekannter Kapselhalter und eine an sich bekannte Kapselöffnungseinheit verwendet werden. Der Kapselhalter dient zur Aufnahme der Kapsel. Bei aufgenommener Kapsel wird der Kapselhalter auf die Kapselöffnungseinheit aufgeschraubt, wobei die Kapsel geöffnet wird, z.B. indem eine Kapselkappe, welche an einem Kapselhals der Kapsel angeordnet ist, mittels eines Stifts der Kapselöffnungseinheit beim Einschrauben des mit der Kapsel versehenen Kapselhalters aufgestochen wird. Zur Gewährleistung der Dichtheit kann eine Kapseldichtung vorgesehen sein, die so angeordnet ist, dass bei aufrechter fluidischer Verbindung zwischen der Kapsel und der Vorrichtung, insbesondere dem Geräteinnenraum, die Kapseldichtung zwischen Kapselöffnungseinheit und Kapsel angeordnet ist.

Der Kapselhalter kann eine mechanische Arretierung umfassen, mit welcher der Kapselhalter fixierbar ist. Dadurch kann insbesondere während der gesamten Handhabung durch den Anwender eine Fixierung der Kapsel an dem Druckregler gewährleistet werden.

Zur Betätigung der Vorrichtung ist typischerweise ein Betätigungselement vorgesehen. Das Betätigungselement ist vorzugsweise als Hebel mit einer Hebelfeder oder als ein federbasierender Druckknopf ausgebildet, um eine bequeme Handhabung für den Anwender zu gewährleisten.

Die Austragungsöffnung kann in einem Entnahmekolben angeordnet sein. Bevorzugt kann die Austragungsöffnung als Austragungsbohrung ausgeführt sein, besonders bevorzugt als Austragungsbohrung im Entnahmekolben.

Zusätzlich kann zur einfacheren Reinigung der Vorrichtung der Entnahmekolben demontierbar ausgebildet sein.

Die Funktion des Druckreglers liegt darin, den hohen Eingangsdruck, welcher dem Kapseldruck entspricht, auf einen definierten Sprühdruck für das Austragen zu regulieren, da der Sprühdruck geringer als der Eingangsdruck sein muss bzw. da der Eingangsdruck ein Vielfaches des gewünschten Sprühdrucks beträgt. Typischerweise liegt der Eingangsdruck in einem Bereich von 150 bar bis 250 bar, wohingegen der Sprühdruck in einem Bereich von 1 bar bis 10 bar liegt. Dabei muss in Abstimmung des Gerätevolumens sowie der maximalen Füllmenge die Gasmasse in der Kapsel so gewählt sein, dass eine ordnungsgemäße Funktion bis zur vollständigen Entleerung des Gerätes gewährleistet ist.

Um dies zu ermöglichen, umfasst der Druckregler einen Niederdruckkolben mit einer Niederdruckkolbenfeder und einer Niederdruckkolbenfläche sowie ein Hochdruckventil mit einem Hochdruckventilstößel und einer Hochdruckventilfeder, wobei mittels des Gases aus der Kapsel ein derartiger Druck auf die Niederdruckkolbenfläche aufbringbar ist, dass die Niederdruckkolbenfeder zusammengedrückt und das Hochdruckventil geschlossen wird.

Dabei handelt es sich bei dem Gas vorzugsweise um Argon, wobei verschiedene sich im Medium nicht lösliche Gase, welche als Schutzgas das Sprühmedium, welches letztlich versprüht bzw. ausgetragen wird, lagerfähig machen, d.h. einen Sauerstoffausschluss bewirken, beispielsweise N₂, in gleicher Weise einsetzbar sind.

Die Niederdruckkolbenfeder ist zwischen dem Niederdruckkolben und einer festen Anschlagfläche vorgespannt, sodass eine Niederdruckkolbenfederkraft auf den Niederdruckkolben wirkt, welcher den Hochdruckventilstößel entgegen einer Hochdruckfederkraft nach hinten drückt und somit das Hochdruckventil öffnet, wodurch ein Gasfluss von der Eingangsseite bis in der Geräteinnenraum gewährleistet ist. Um dabei einen sicheren Gasfluss in einer Strömungsrichtung von der Kapsel zum Geräteinnenraum zu gewährleisten, ist es bei einer bevorzugten Ausführungsform der erfindungsgemäßen Vorrichtung vorgesehen, dass zwischen den Kapselverbindungsmitteln und dem Geräteinnenraum, vorzugsweise im Bereich des Geräteinnenraums ein Rückschlagventil vorgesehen ist. Der Gasfluss entgegengesetzt zur Strömungsrichtung wird durch das Rückschlagventil hingegen blockiert.

Darüber hinaus ist es bei einer bevorzugten Ausführungsform der erfindungsgemäßen Vorrichtung vorgesehen, dass das Behältnis zumindest abschnittsweise von einer thermischen Isolierung umgeben ist, um etwaige Verbrennungen eines Anwenders zu verhindern sowie um eine Isolierung des Sprühmediums zum Schutz vor einer etwaigen Abkühlung zu gewährleisten. Die erfindungsgemäße Vorrichtung eignet sich somit ideal sowohl für Kalt- als auch für Heißanwendungen bis typischerweise 120°C. Beispielsweise sind Anwendungen, bei denen heiße Schokolade ausgetragen wird, bei Temperaturen typischerweise größer als 40°C denkbar.

Vorzugsweise ist die erfindungsgemäße Vorrichtung zum Warmhalten des sich in der Flasche befindlichen Mediums geeignet. Die Vorrichtung kann zum Zwecke des Warmhaltens oder Erwärmens z.B. in ein Wasserbad gegeben werden. Die thermische Isolierung kann hierzu entfernt werden, um das Erwärmen bzw. Warmhalten nicht zu behindern.

Zusätzlich umfasst der Druckregler in einer bevorzugten Ausführungsform ferner einen Filter, welcher das Innere des Druckreglers vor etwaigen Verunreinigungen schützt.

Durch geschickte Auslegung des Druckreglers kann außerdem sichergestellt werden, dass der Druck im Geräteinnenraum konstant bei einem Wert gehalten wird, der deutlich unter dem Druck in der Kapsel liegt und der vorzugsweise gleich dem Sprühdruck ist. Dies hat den Vorteil, dass die Konsistenz des Sprühmediums einstellbar ist und konstant gehalten werden kann. Insbesondere kann hierdurch vermieden werden, dass die Konsistenz des Sprühmediums aufgrund eines zu hohen Drucks im Geräteinnenraum eine ungewünschte Qualität annimmt, wie dies insbesondere bei Lebensmitteln relativ häufig der Fall sein kann. Beispielsweise kann ein durch einen zu hohen Druck verursachtes ungewünschtes Aufschäumen vermieden werden. Daher ist es bei einer bevorzugten Ausführungsform der erfindungsgemäßen Vorrichtung vorgesehen, dass der Druckregler zwischen den Kapselverbindungsmitteln und dem Rückschlagventil angeordnet ist. D.h. die Druckregelung findet bezogen auf den Geräteinnenraum eingangsseitig statt.

Zusätzlich umfasst die Vorrichtung vorzugsweise ein Überdruckventil, welches der eigentlichen Druckregelung nachgeordnet ist. Dieses Überdruckventil wird aus Sicherheitsgründen in den Druckregler integriert und begrenzt im Falle eines Systemausfalls den maximalen Druck innerhalb der Vorrichtung.

Dazu ist das Überdruckventil dicht mit dem Niederdruckkolben verbunden und öffnet im Falle eines definierten maximalen Gasdrucks, wodurch Gas aus der Vorrichtung abgeleitet wird. Je höher der Gasdruck ist, desto höher ist die Druckkraft, die den Niederdruckkolben in Richtung der festen Anschlagfläche bewegt. Stößt ein am Überdruckventil angeordneter Hochdruckventilstößel gegen die feste Anschlagfläche, so öffnet das Hochdruckventil und durch etwaige Entlüftungsbohrungen wird das Gas aus der Vorrichtung geleitet.

Dabei ist in einer weiteren bevorzugten Ausführungsform ein zusätzliches Rückschlagventil vorgesehen, welches zwischen den Kapselverbindungsmitteln und dem Druckregler angeordnet ist. Auch dieses Rückschlagventil öffnet nur in eine Strömungsrichtung, wodurch das Gas nur in den Geräteinnenraum strömen kann. Indem der Druckregler in Strömungsrichtung gesehen somit zwischen zwei Rückschlagventilen angeordnet ist, kann eine Geschirrspülmaschinentauglichkeit der erfindungsgemäßen Vorrichtung erreicht werden, da der Druckregler durch die Rückschlagventile gegenüber Flüssigkeiten abgedichtet werden kann.

Darüber hinaus umfasst der Druckregler in einer Ausführungsform ferner ein Druckbegrenzungsventil, welches einen Druckbegrenzungsventilkolben mit einer Druckbegrenzungsventilkolbenfläche aufweist, wobei vorzugsweise das Druckbegrenzungsventil einen Dichtkegel umfasst. Weiters kann das Druckbegrenzungsventil ein, vorzugsweise federbasiertes Rückstellelement, z.B. eine Spiralfeder oder eine Gasdruckfeder, umfassen, welches Rückstellelement den Druckbegrenzungsventilkolben mit einer definierten Rückstellkraft in Strömungsrichtung drückt, um das Druckbegrenzungsventil zu öffnen.

Beim Öffnen der Kapsel strömt das Gas, vorzugsweise über eine Eingangsbohrung, in das Druckbegrenzungsventil und bei geöffnetem Druckbegrenzungsventil von diesem weiter in den Druckregler, insbesondere in das Hochdruckventil. Insbesondere bei geschlossenem Hochdruckventil steigt der auf die Druckbegrenzungsventilkolbenfläche wirkende Gasdruck aufgrund des Eingangsdrucks rasch an, bis die resultierende Kraft größer als die durch das Rückstellelement aufgebrachte Rückstellkraft ist, worauf der Druckbegrenzungsventilkolben das Druckbegrenzungsventil schließt, vorzugsweise indem der Druckbegrenzungsventilkolben gegen die Strömungsrichtung zum Dichtkegel gedrückt wird.

Vorzugsweise kann aber auf ein separates Rückstellelement auch verzichtet werden, indem eine stirnseitige Teilfläche des Druckbegrenzungsventilkolbens vorgesehen ist, die der Druckbegrenzungsventilkolbenfläche gegenüberliegend und von dieser weg weisend angeordnet ist und eine andere, vorzugsweise geringere Größe als die Druckbegrenzungsventilkolbenfläche aufweist. Indem nicht nur die Druckbegrenzungsventilkolbenfläche, sondern auch die stirnseitige Teilfläche des Druckbegrenzungskolbens einem Gasdruck ausgesetzt wird, können unterschiedlich große, gegeneinander gerichtete Druckkräfte realisiert werden, die auf den Druckbegrenzungskolben wirken und diesen somit hin und her bewegen können. Entsprechend kann das Druckbegrenzungsventil auch ohne separates Rückstellelement geöffnet und geschlossen werden.

Konkret ist dabei das Druckbegrenzungsventil so ausgelegt, dass bei offener Kapsel und geschlossenem Druckbegrenzungsventil nur eine fluidische Verbindung der Kapsel mit der stirnseiteigen Teilfläche, nicht aber mit der Druckbegrenzungskolbenfläche besteht. Entsprechend nimmt der Gasdruck nur auf der Seite der Teilfläche des Druckbegrenzungsventilkolbens aufgrund des Eingangsdrucks zu, bis die auf die Teilfläche wirkende Druckkraft größer ist als die auf die Druckbegrenzungsventilkolbenfläche wirkende Druckkraft, sodass der Druckbegrenzungsventilkolben, vorzugsweise in Strömungsrichtung, bewegt wird, um das Druckbegrenzungsventil zu öffnen.

Bei geschlossenem Hochdruckventil steigt der Gasdruck nun auch auf Seite der Druckbegrenzungsventilkolbenfläche an, sodass dieser im Wesentlichen gleich groß wird wie der Druck auf der Seite der Teilfläche. Da jedoch die Teilfläche kleiner als die Druckbegrenzungsventilkolbenfläche ist, ist die resultierende Druckkraft, die auf die Druckbegrenzungsventilkolbenfläche wirkt, größer als die Druckkraft, die auf die Teilfläche wirkt, und der Druckbegrenzungskolben wird wieder retour, vorzugsweise gegen die Strömungsrichtung, bewegt, um das Druckbegrenzungsventil zu schließen.

Sowohl bei Vorhandensein als auch bei Fehlen des Rückstellelements wird das Gas bei geöffnetem Hochdruckventil, vorzugsweise über eine Ausgangsbohrung in einem Reglerkern, aus dem Druckregler geleitet.

In einer weiteren bevorzugten Ausführungsform umfasst die Vorrichtung einen zweiten Druckregler, wobei der zweite Druckregler dem ersten Druckregler vorgeschaltet ist. Indem zwei hintereinander geschaltete Druckregler vorgesehen sind, wird die Regelgenauigkeit verbessert, insbesondere werden Regelabweichungen des ersten Druckreglers durch den zweiten Druckregler reduziert.

Um dies zu ermöglichen, umfasst der zweite Druckregler vorzugsweise einen zusätzlichen Niederdruckkolben mit einer zusätzlichen Niederdruckkolbenfeder und einer zusätzlichen Niederdruckkolbenfläche sowie ein zusätzliches Hochdruckventil mit einem zusätzlichen Hochdruckventilstößel und einer zusätzlichen Hochdruckventilfeder umfasst, wobei mittels des Gases aus der Kapsel ein derartiger Druck auf die zusätzliche Niederdruckkolbenfläche aufbringbar ist, dass die zusätzliche Niederdruckkolbenfeder zusammengedrückt und das zusätzliche Hochdruckventil geschlossen wird.

Das Schalten des zweiten Druckreglers vor den ersten Druckregler kann insbesondere durch eine fluidische Verbindung zwischen dem Hochdruckventil des ersten Druckreglers und der zusätzlichen Niederdruckkolbenfläche des zweiten Druckreglers realisiert sein.

Bei einer bevorzugten Ausführungsform der erfindungsgemäßen Vorrichtung ist es vorgesehen, dass mindestens ein Düsenverbindungsmittel zur Herstellung einer fluidischen Verbindung zwischen einer austauschbaren Düse und der Austragungsöffnung vorgesehen ist. Vorzugsweise nimmt das mindestens eine Düsenverbindungsmittel die Düse dabei auf. Das mindestens eine Düsenverbindungsmittel ermöglicht den Einsatz von verschiedenartigsten Düsen, durch die das Sprühmedium letztlich ausgetragen wird. Entsprechend lassen sich mit der erfindungsgemäßen Vorrichtung unterschiedliche Sprühbilder erzielen bzw. können diese einfach durch Wahl und Montage der entsprechenden Düsen eingestellt werden.

Bei einer besonders bevorzugten Ausführungsform der erfindungsgemäßen Vorrichtung ist es vorgesehen, dass das mindestens eine Düsenverbindungsmittel eine untere Düsenverschraubung und/oder eine obere Düsenverschraubung umfasst, welche entlang der Austragungsöffnung angeordnet sind, wobei vorzugsweise in der oberen Düsenverschraubung eine austauschbare Düse angeordnet ist. Zum einen ist dies eine konstruktiv besonders einfache Art, Düsenverbindungsmittel zu realisieren. Zum anderen ermöglichen die Düsenverschraubungen auch das Anbringen von Fülltüllen oder Dekortüllen mit unterschiedlichen Abmessungen. Entsprechend lassen sich mit der erfindungsgemäßen Vorrichtung unterschiedliche Sprühbilder erzielen bzw. können diese einfach durch Wahl und Montage der entsprechenden Füll- oder Dekortüllen eingestellt werden.

Dabei können die untere Düsenverschraubung und die obere Düsenverschraubung einteilig miteinander ausgebildet sein. Weiters kann die untere Düsenverschraubung untrennbar mit der Flasche verbunden sein.

Im Detail wird der Entnahmekolben von einer Kopfinnenseite in eine zugehörige Kolbenbohrung geführt und durch eine Aussparung am Betätigungselement, beispielsweise am Hebel, hindurch geschoben. Dabei ist der Hebel mittels eines eingepressten Achsstifts am Kopf befestigt und wird mit der Hebelfeder vorgespannt. Dabei ist der Entnahmekolben mit der unteren Düsenverschraubung derart verschraubt, dass eine Achsbewegung des Entnahmekolbens gewährleistet und der Entnahmekolben über die Hebelfeder vorgespannt ist. Die Vorspannung presst eine Dichtung des Entnahmekolbens gegen ein im Kopf angeordnetes Dichtbett und sorgt für eine Dichtfunktion, auch ohne dass im Geräteinnenraum ein Druck vorherrscht. Die Düse ist dabei vorzugsweise wechselbar über die obere Düsenverschraubung mit der unteren Düsenverschraubung fixiert.

Durch Betätigung des Hebels bewegt sich der Entnahmekolben nach unten und gibt seine Dichtwirkung auf, wodurch das Sprühmedium durch den im Inneren bzw. im Geräteinnenraum aufgebauten Gasdruck durch die Austragungsbohrung und weiter durch die Düse aus der Vorrichtung geleitet wird.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine perspektivische Darstellung eines erfindungsgemäßen Systems mit einer erfindungsgemäßen Vorrichtung zum Austragen von Fluiden mit gleichmäßigem Druck
- Fig. 2: eine Draufsicht auf das erfindungsgemäße System
- Fig. 3: eine Schnittdarstellung des erfindungsgemäßen Systems, wobei der Schnitt A-A in Fig. 2 eingezeichnet ist
- Fig. 4: eine Schnittdarstellung eines Druckreglers einer ersten Ausführungsform der erfindungsgemäßen Vorrichtung, wobei die Schnittebene B in Fig. 2 und die Schnittrichtung C in Fig. 3 eingezeichnet sind
- Fig. 5: eine Schnittdarstellung des Druckreglers einer zweiten Ausführungsform der erfindungsgemäßen Vorrichtung mit einem Druckbegrenzungsventil, wobei die Schnittebene B in Fig. 2 und die Schnittrichtung C in Fig. 3 eingezeichnet sind
- Fig. 6: eine Schnittdarstellung des Druckreglers einer dritten Ausführungsform der erfindungsgemäßen Vorrichtung mit einem zweiten vorgeschalteten Druckregler, wobei die Schnittebene B in Fig. 2 und die Schnittrichtung C in Fig. 3 eingezeichnet sind

### WEGE ZUR AUSFÜHRUNG DER ERFINDUNG

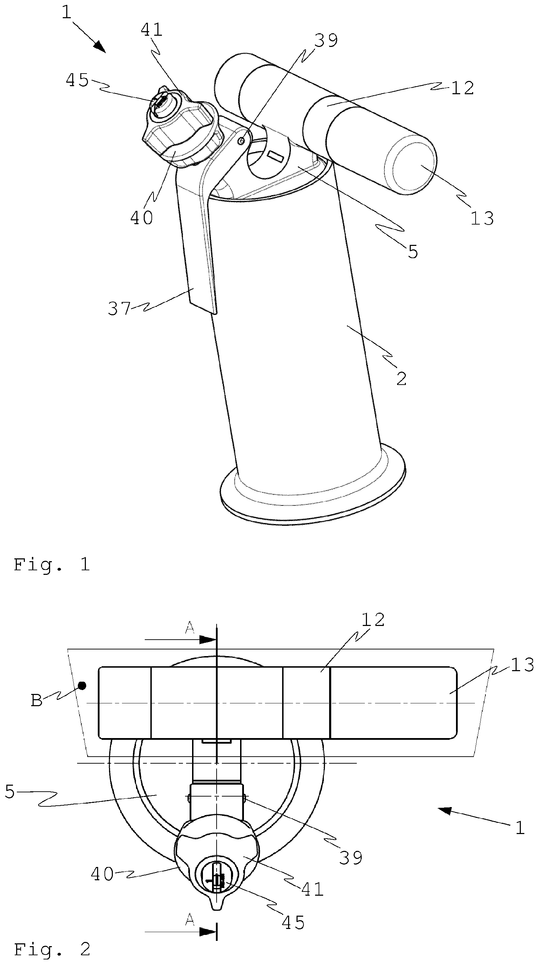

In Fig. 1 und Fig. 2 ist eine erfindungsgemäße Vorrichtung 1 erkennbar, die ein Behältnis umfasst, welches geöffnet und wieder verschlossen werden kann. Dabei ist das Behältnis in den gezeigten Ausführungsbeispielen aus einer Flasche 3 und einem Kopf 5, der mit der Flasche 3 verschraubt werden kann, aufgebaut.

Zum Schutz vor etwaigen Verbrennungen sowie zur besseren Handhabung ist vorzugsweise eine thermische Flaschenisolierung 2 vorgesehen, in der die Flasche 3 angeordnet ist.

Die Flasche 3 und der Kopf 5 bilden in einem zusammengefügten Zustand einen Geräteinnenraum 7 des Behältnisses aus, in welchem Geräteinnenraum 7 ein Medium, vorzugsweise ein Lebensmittel, das ausgetragen bzw. versprüht werden soll, angeordnet werden kann. Das Austragen erfolgt mittels eines unter Druck stehenden Gases.

Im Folgenden wird das auszutragende Fluid als Sprühmedium 4 bezeichnet, welches mit dem Medium identisch sein oder sich aus dem Medium und dem Gas zusammensetzen kann.

In den Figuren ist ein erfindungsgemäßes System gezeigt, welches die erfindungsgemäße Vorrichtung 1 und eine austauschbare und mit dem Gas gefüllte Kapsel 8 umfasst, wobei bei dem in den Figuren gezeigten System die Kapsel 8 in fluidischer Verbindung mit der Vorrichtung 1 steht. Letzteres wird mittels Kapselverbindungsmitteln der Vorrichtung 1 erreicht, die einen Kapselhalter 12 und eine Kapselöffnungseinheit 15 umfassen.

Der Kapselhalter 12 ist am Kopf 5 angeordnet. Im Kapselhalter 12 ist die mit Gas, vorzugsweise Argon, gefüllte Kapsel 8 derart angeordnet, dass eine fluidische Verbindung zwischen der Kapsel 8 und der Vorrichtung 1 gewährleistet ist, wobei zur besseren Griffmöglichkeit, zur Temperaturisolierung sowie als Dämpfungselement eine Kapselhalterabdeckung 13 den Kapselhalter 12 zumindest teilweise umgibt. Dabei ist der Kapselhalter 12 am Druckregler 14, welcher vorzugsweise in einem Reglergehäuse 59 fixiert ist, welches Reglergehäuse 59 besonders bevorzugt vom Kopf 5 ausgebildet ist, mittels eines am Druckregler 14 angeordneten Anschlussgewindes vorzugsweise aufgeschraubt, wobei etwaige andere Verbindungsformen, bspw. eine Rastverbindung oder ein Bajonettverschluss ebenso möglich sind. In gleicher Weise ist es möglich, dass der Druckregler 14 direkt an der Flasche 3 angeordnet ist.

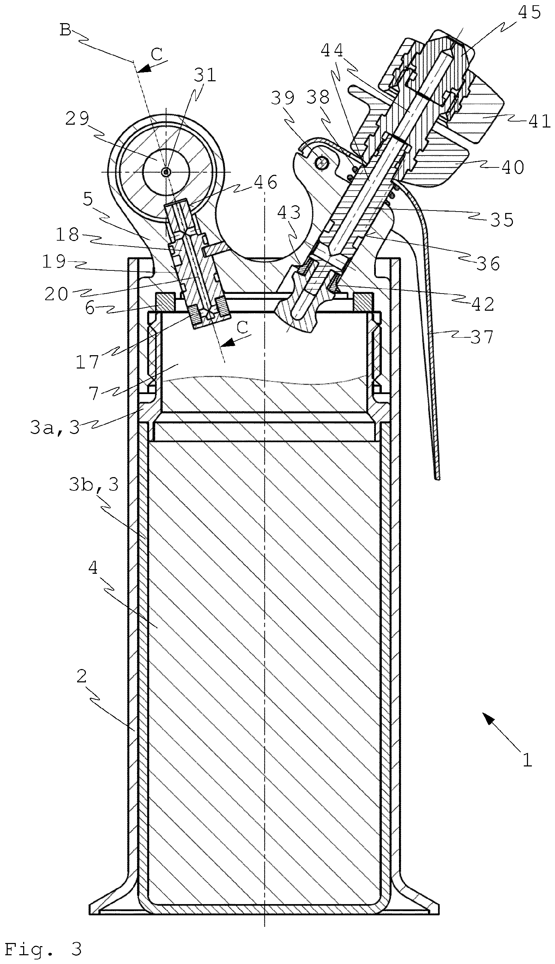

Eine Betätigung der Vorrichtung 1 erfolgt gemäß Fig. 3 mittels eines, vorzugsweise am Kopf 5 angeordneten Betätigungselements 37, welches wie in den Figuren dargestellt als federbasierter 38 Hebel mit Achsstift 39 sowie als federbasierter 38 Druckknopf ausgebildet sein kann. Durch Betätigung des Betätigungselements 37 wird das Sprühmedium 4 aus der Flasche 3 mittels eines Entnahmekolbens 35, der in einer Kolbenbohrung 36 im Kopf 5 angeordnet ist, durch eine Austragungsbohrung 44 bzw. vorzugsweise durch eine entlang der Austragungsbohrung 44 angeordnete austauschbare Düse 45 ausgebracht. Im Detail sind in der dargestellten Ausführungsform entlang der Austragungsbohrung 44 eine untere Düsenverschraubung 40 und eine obere Düsenverschraubung 41 angeordnet, wobei in der oberen Düsenverschraubung 41 die austauschbare Düse 45 angeordnet ist. In gleicher Weise könnten jedoch die untere Düsenverschraubung 40 und die obere Düsenverschraubung 41 einteilig miteinander ausgebildet sind. Zur Gewährleistung eines sicheren Gasflusses in einer Strömungsrichtung von der Kapsel 8 zum Geräteinnenraum 7 ist im Bereich des Geräteinnenraumes 7 ein Rückschlagventil 17 angeordnet.

In der in den Figuren dargestellten bevorzugten Ausführungsform ist der Druckregler 14 zur Gewährleistung eines gleichmäßigen Auftrages des Sprühmediums 4 zwischen der Kapsel 8 und dem Rückschlagventil 17 am Kopf 5 angeordnet, wobei der Druckregler 14 nicht nur am Kopf 5, sondern beispielsweise auch an der Flasche 3 angeordnet sein kann. Dabei gilt es anzumerken, dass der Entnahmekolben 35 gemäß Fig. 3 mittels einer Dichtung 42, welche an einem durch den Kopf 5 gebildeten Dichtbett 43 anliegt, vor einem etwaigen Gasaustritt durch die Kolbenbohrung 36 abgedichtet ist. Auch ist die in Fig. 3 dargestellte Flasche 3 zweiteilig mit einer oberen Flaschenhälfte 3a, welche ein Gewinde aufweist, und einer unteren Flaschenhälfte 3b ausgebildet, wobei die beiden Flaschenhälften 3a, 3b vorzugsweise miteinander verpresst oder verschweißt sind. In gleicher Weise ist es auch möglich, dass die Flasche 3 einteilig ausgebildet ist.

Ebenfalls zur Vermeidung eines etwaigen Gasaustritts ist eine Kopfdichtung 6 zwischen Kopf 5 und Flasche 3 derart angeordnet, dass ihre Planflächen an Kopf 5 und Flasche 3 bzw. gegebenenfalls oberer Flaschenhälfte 3a anliegen, wobei der Kopf 5 über ein Anschlussgewinde mit der Flasche 3 mit der dazwischen angeordneten Kopfdichtung 6 verschraubt ist, wodurch der Geräteinnenraum 7 in sich dicht und das darin sich befindliche Sprühmedium 4 eingeschlossen ist.

Das Rückschlagventil 17 ist mit Hilfe eines Rückschlagventilträgers 18 im Bereich des Geräteinnenraums 7 angeordnet, wobei der Rückschlagventilträger 18 durch eine sich im Kopf 5 befindliche Rückschlagventilträgerbohrung 19 und einer sich im Druckregler 14 befindlichen Druckregler-Gehäusebohrung 46 angeordnet ist und mittels einer Rückschlagventilbohrung 20 eine Verbindung zwischen Druckregler 14 und Rückschlagventil 17 ermöglicht. Mit anderen Worten ist der Druckregler 14 derart positioniert, dass die Druckregler-Gehäusebohrung 46 den Rückschlagventilträger 18 aufnimmt. Durch diese Verbindung werden zum einen eine Verdrehsicherung und zum anderen eine Fixierung des Druckreglers 14 in Achsrichtung gewährleistet. Über die Rückschlagventilbohrung 20 ist somit ein Gasfluss vom Druckregler 14 über das Rückschlagventil 17 in den Geräteinnenraum 7 gewährleistet. Dabei öffnet das Rückschlagventil 17 nur in der Strömungsrichtung, wodurch Gas nur in Richtung des Geräteinnenraums 7 strömen kann, jedoch nicht wieder zurück in Richtung des Druckreglers 14.

Der Entnahmekolben 35 ist von der Kopfinnenseite in die Kolbenbohrung 36 geführt und durch eine Aussparung am Betätigungselement 37 hindurch geschoben. In den in den Figuren dargestellten Ausführungsformen handelt es sich bei dem Betätigungselement 37 um einen Hebel. Der Hebel 37 ist mit dem eingepressten Achsstift 39 am Kopf 5 befestigt und mittels der Hebelfeder 38 vorgespannt. Der Entnahmekolben 35 ist mit der unteren Düsenverschraubung 40 verschraubt, wodurch eine Achsbewegung des Entnahmekolbens 35 gewährleistet und der Entnahmekolben 35 über die Hebelfeder 38 vorgespannt ist. Die Vorspannung presst die Dichtung 42 des Entnahmekolbens 35 gegen das Dichtbett 43 und sorgt für eine Dichtfunktion, auch ohne dass im Geräteinnenraum 7 ein Druck vorherrscht.

Durch Betätigung des Hebels 37 bewegt sich der Entnahmekolben 35 nach unten und gibt seine Dichtwirkung auf, wodurch das Sprühmedium 4 durch den im Inneren bzw. im Geräteinnenraum 7 aufgebauten Gasdruck durch die Austragungsbohrung 44 und weiter durch die Düse 45 aus der Vorrichtung 1 geleitet wird. Hierbei gilt es anzumerken, dass bei den gezeigten Ausführungsformen während der Anwendung der Vorrichtung 1 diese derart umgedreht werden muss, dass der Kopf 5 zumindest näherungsweise fußbodenseitig bzw. nach unten, d.h. in Richtung der Schwerkraft weisend, orientiert ist.

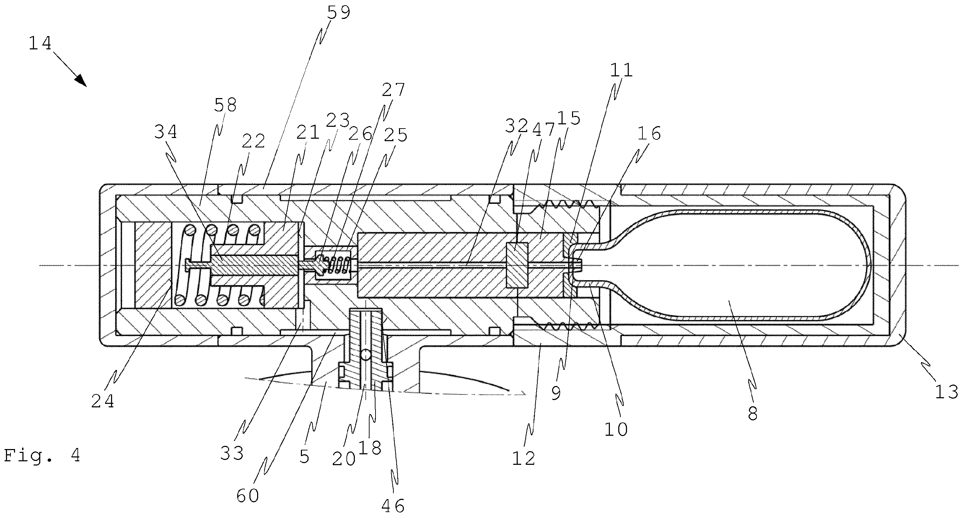

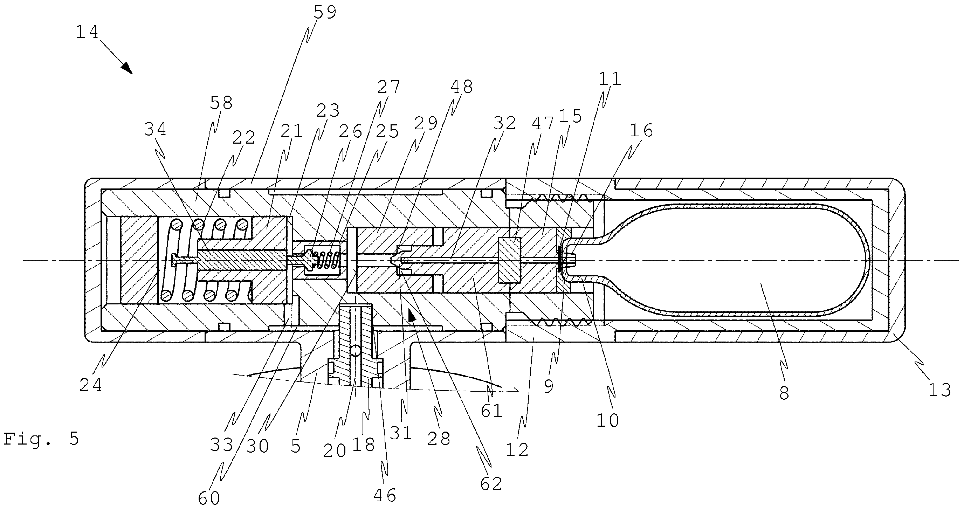

Fig. 4 zeigt den Druckregler 14 einer ersten Ausführungsform der erfindungsgemäßen Vorrichtung 1 mit einem Niederdruckkolben 21, einer Niederdruckkolbenfeder 22 sowie einer Niederdruckkolbenfläche 23. Hingegen zeigt Fig. 5 eine zweite erfindungsgemäße Ausführungsform, bei der zusätzlich ein Druckbegrenzungsventil 28 vorgesehen ist, welches einen Druckbegrenzungsventilkolben 29 mit einer Druckbegrenzungsventilkolbenfläche 30 aufweist, wobei das Druckbegrenzungsventil 28 einen Dichtkegel 31 umfasst, der in Strömungsrichtung gesehen am Ende eines Blocks 61 ausgebildet ist. Dabei ist zum Schutz vor etwaigen Verunreinigungen zusätzlich ein Filter 47 im bzw. vor dem Druckregler 14 angeordnet. Dabei ist vorzugsweise zum Schutz der Vorrichtung 1 bzw. des Druckreglers 14 nach bzw. in dem Druckregler 14 ein Überdruckventil mit einem Überdruckventilstößel 34 angeordnet, wobei beispielsweise auch eine Berstscheibe einsetzbar ist. Diese Berstscheibe könnte überall, wo sie mit einem Druck innerhalb der Flasche 3 in Kontakt tritt, angeordnet sein. Das Überdruckventil begrenzt im Falle eines Systemausfalls des Druckreglers 14 den maximalen Druck innerhalb der Vorrichtung 1.

Dabei ist das Überdruckventil fest und dicht mit dem Niederdruckkolben 21 verbunden und öffnet im Falle eines definierten maximalen Gasdrucks, wodurch Gas aus der Vorrichtung 1 abgeleitet wird.

Je höher der Gasdruck ist, desto höher ist die Druckkraft, die den Niederdruckkolben 21 in Richtung einer festen Anschlagfläche 24 bewegt. Stößt der Überdruckventilstößel 34 gegen die feste Anschlagfläche 24, so öffnet das Überdruckventil, wobei das Gas durch etwaige Entlüftungsbohrungen (nicht dargestellt) aus der Vorrichtung 1 abgeleitet wird.

Dabei ist die Niederdruckkolbenfeder 22 zwischen dem Niederdruckkolben 21 und der festen Anschlagfläche 24 vorgespannt, wobei eine Niederdruckkolbenfederkraft auf den Niederdruckkolben 21 wirkt, welcher einen Hochdruckventilstößel 26 entgegen einer Hochdruckfederkraft einer Hochdruckventilfeder 27 des Hochdruckventils 25 nach hinten, d.h. gegen die Strömungsrichtung, drückt und somit das Hochdruckventil 25 öffnet, wodurch ein Gasfluss von der Eingangsseite bis in den Geräteinnenraum 7 ermöglicht wird. Es sei bemerkt, dass trotz gleicher Schraffierung in den Figuren der Hochdruckventilstößel 26 und der Überdruckventilstößel 34 zwei voneinander unabhängige, separate Elemente sind.

Im Detail wird bei der in Fig. 5 gezeigten, zweiten Ausführungsform ein einem Kapseldruck entsprechender Eingangsdruck in zwei Stufen auf einen definierten bzw. gewünschten Sprühdruck gemindert. Eingangsseitig findet sich ein Druckbegrenzungsventil 28, welches den Gasdruck als erste Stufe auf einen niedrigeren Wert als den Kapseldruck reduziert, vorzugsweise um einen Faktor von 0,25, wobei ein Bereich von 0,1 bis 0,5 ebenso technisch realisierbar ist. Die zweite Druckstufe basiert auf einer Druckregelung mittels einer Kolbenkonstruktion, wodurch der Druck weiter um einen Faktor von vorzugsweise 0,1 reduziert wird, wobei ein Bereich von 0,05 bis 0,2 ebenso technisch realisierbar ist. Ein resultierender Gasdruck, der vorzugsweise dem Sprühdruck entspricht, wird im Anschluss dem Geräteinnenraum 7 bzw. dem zu verarbeitenden Fluid zugeführt.

Darüber hinaus umfasst in der zweiten Ausführungsform der erfindungsgemäßen Vorrichtung 1 der Druckregler 14, wie bereits erwähnt, das Druckbegrenzungsventil 28, welches den Druckbegrenzungsventilkolben 29 mit einer Druckbegrenzungsventilkolbenfläche 30 aufweist, wobei das Druckbegrenzungsventil 28 den Dichtkegel 31 umfasst (vgl. Fig. 5).

Weiters kann das Druckbegrenzungsventil 28 ein, vorzugsweise federbasiertes Rückstellelement (nicht dargestellt), z.B. eine Spiralfeder oder eine Gasdruckfeder, welches Rückstellelement den Druckbegrenzungsventilkolben 29 mit einer definierten Rückstellkraft in Strömungsrichtung drückt, um das Druckbegrenzungsventil 28 zu öffnen.

Somit strömt durch das Öffnen der Kapsel 8 das Gas über eine Eingangsbohrung 32 im Block 61 in einer radialen Richtung in das Druckbegrenzungsventil 28 und von diesem weiter, vorzugsweise über eine Übergangsbohrung, in das Hochdruckventil 25.

Insbesondere bei geschlossenem Hochdruckventil 25 steigt der auf die Druckbegrenzungsventilkolbenfläche 30 wirkende Gasdruck rasch an, bis die resultierende Kraft größer als die durch das Rückstellelement aufgebrachte Rückstellkraft ist, worauf der Druckbegrenzungsventilkolben 29 gegen die Strömungsrichtung zum Dichtkegel 31 gedrückt und das Druckbegrenzungsventil 28 dadurch geschlossen wird.

Fig. 5 stellt jedoch eine bevorzugte Ausführungsform dar, bei der auf ein separates Rückstellelement verzichtet wird. Dies wird ermöglicht, indem eine stirnseitige Teilfläche 48 des Druckbegrenzungsventilkolbens 29 vorgesehen ist, die der Druckbegrenzungsventilkolbenfläche 30 gegenüberliegend und von dieser weg weisend angeordnet ist und eine andere, vorzugsweise geringere Größe als die Druckbegrenzungsventilkolbenfläche 30 aufweist.

Bei offener Kapsel 8 und geschlossenem Druckbegrenzungsventil 28 besteht somit nur eine fluidische Verbindung der Kapsel 8 mit der stirnseiteigen Teilfläche 48, nicht aber mit der Druckbegrenzungskolbenfläche 30. Entsprechend nimmt der Gasdruck nur im Volumen 62 aufgrund des Eingangsdrucks zu, bis die auf die Teilfläche 48 wirkende Druckkraft größer ist als die auf die Druckbegrenzungsventilkolbenfläche 30 wirkende Druckkraft, sodass der Druckbegrenzungsventilkolben 29 in Strömungsrichtung bewegt wird, um das Druckbegrenzungsventil 28 zu öffnen.

Bei geschlossenem Hochdruckventil 25 steigt der Gasdruck nun auch auf Seite der Druckbegrenzungsventilkolbenfläche 30 an, sodass dieser im Wesentlichen gleich groß wird wie der Druck auf der Seite der Teilfläche 48. Da jedoch die Teilfläche 48 kleiner als die Druckbegrenzungsventilkolbenfläche 30 ist, ist die resultierende Druckkraft, die auf die Druckbegrenzungsventilkolbenfläche 30 wirkt, größer als die Druckkraft, die auf die Teilfläche 48 wirkt, und der Druckbegrenzungskolben 29 wird wieder retour, gegen die Strömungsrichtung bewegt, um das Druckbegrenzungsventil 28 zu schließen. Auf diese Weise wird also auch ohne separates Rückstellelement ein Öffnen und Schließen des Druckbegrenzungsventils bewirkt.

Sowohl bei Vorhandensein eines Rückstellelements als auch im in Fig. 5 gezeigten Fall, wo kein separates Rückstellelement vorgesehen ist, wird bei geöffnetem Hochdruckventil 25 das Gas über eine Ausgangsbohrung 33 in einem Reglerkern 58 aus dem Druckregler 14 geleitet. Dabei schließt eine Nut 60 an die Ausgangsbohrung 33 an und verbindet die Ausgangsbohrung 33 fluidisch mit der Druckregler-Gehäusebohrung 46 bzw. der Rückschlagventilträgerbohrung 19, sodass das Gas in die Rückschlagventilbohrung 20 und somit letztlich in den Geräteinnenraum 7 strömen kann. Die Nut 60 wird dabei durch das Reglergehäuse 59 bzw. den Kopf 5 nach außen hin abgedichtet.

In der zweiten Druckstufe wirkt der Druck des von der Hochdruckstufe einströmenden Gases auf die Niederdruckkolbenfläche 23, wobei der steigende Druck gegen die Niederdruckkolbenfeder 22 wirkt und der Hochdruckventilstößel 26 das Hochdruckventil 25 schließt, wenn der gewünschte Sprühdruck erreicht ist.

Durch Entnahme der gebildeten Creme bzw. des Sprühmediums 4 vergrößert sich das für das Gas zur Verfügung stehende Volumen im Geräteinnenraum 7, wodurch der Ausgangsdruck bzw. der Gasdruck, der auf die Niederdruckkolbenfläche 23 ausgeübt wird, sinkt. Die Niederdruckkolbenfederkraft ist ab einem gewissen Punkt stärker als die durch das Gas auf die Niederdruckkolbenfläche 23 ausgeübte Druckkraft. Dadurch drückt der Niederdruckkolben 21 den Hochdruckventilstößel 26 in Strömungsrichtung gesehen nach hinten bzw. zurück, wodurch das Hochdruckventil 25 geöffnet wird. Bei einer Entnahme des Sprühmediums 4 bzw. der gebildeten Creme durch Versprühen schließt und öffnet das Hochdruckventil 25 ständig, um einen Kräfteausgleich zu schaffen und somit den Ausgangsdruck konstant auf dem gewünschten Sprühdruck zu halten.

Entsprechend schließt und öffnet sich in der Ausführungsform der Fig. 5 auch das Druckbegrenzungsventil 28 ständig, wodurch insgesamt eine sehr genaue Druckregelung gewährleistet ist.

Zusätzlich ist zur Vermeidung eines etwaigen Gasaustritts zwischen der Kapsel 8 und der zugehörigen Kapselöffnungseinheit 15 eine Kapseldichtung 11 angeordnet, wobei die Kapsel 8 bzw. eine Kapselkappe 9, welche an einem Kapselhals 10 angeordnet ist, mittels eines Stifts 16 beim Einschrauben des mit der Kapsel 8 versehenen Kapselhalters 12 aufgestochen wird. Zusätzlich erfolgt mittels der Anordnung der Kapsel 8 im Kapselhalter 12 bei Verschraubung des Kapselhalters 12 an dem Druckregler 14 eine Zentrierung der Kapsel 8, wobei vorzugsweise bei einer definierten Anzahl an Schraubumdrehungen der Stift 16 die Kapselkappe 9 der Kapsel 8 durchstößt. Die Kapsel 8 wird im Moment des Öffnens mit der Kapseldichtung 11 derart abgedichtet, dass das austretende Gas lediglich in das Innere des Druckreglers 14 strömen kann. Die Kapselöffnungseinheit 15 ist dabei so konzipiert, dass ein Gasfluss lediglich durch das Öffnen einer Kapsel 8 ermöglicht wird. Wird keine Kapsel 8 zur Kapselöffnungseinheit 15 positioniert, so ist das Innere des Druckreglers 14 gegen die Umgebung abgedichtet.

In gleicher Weise ist es möglich, dass anstatt der Kapselöffnungseinheit 15 direkt an der Kapsel 8 eine Dichtung mit einer Öffnungseinrichtung, welche bspw. mittels eines Stifts aktiviert wird, angeordnet ist. Dabei ist es auch möglich, dass ein zusätzliches Rückschlagventil zwischen der Kapsel 8 und dem Druckregler 14 angeordnet ist.

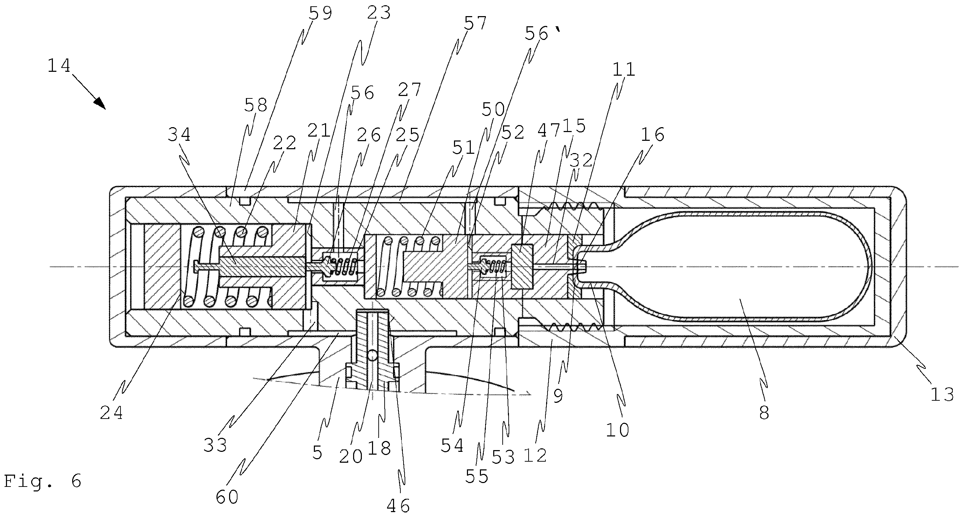

In der in Fig. 6 dargestellten dritten Ausführungsform weist die erfindungsgemäße Vorrichtung 1 einen zweiten zwischengeschalteten Druckregler auf, welcher einen zusätzlichen Niederdruckkolben 50 mit einer zusätzlichen Niederdruckkolbenfläche 52 umfasst sowie eine zusätzliche Niederdruckkolbenfeder 51. Ebenso weist der zweite Druckregler einen zusätzlichen Hochdruckventilstößel 54 sowie ein zusätzliches Hochdruckventil 53 zur Reduktion von Regelabweichungen auf. Das zusätzliche Hochdruckventil 53 weist dabei eine mit einer zusätzlichen Hochdruckfederkraft in Strömungsrichtung und gegen den zusätzlichen Hochdruckventilstößel 54 drückende zusätzliche Hochdruckventilfeder 55 auf. Somit ergibt sich eine Funktionsweise des zweiten Druckreglers, die vollkommen analog ist zur oben beschriebenen Funktionsweise des Druckreglers 14 der Fig. 4, wobei der zweite Druckregler dem ersten Druckregler 14 vorgeschaltet ist.

Konkret wirkt in der Niederdruckstufe der Druck des von der Hochdruckstufe einströmenden Gases auf die Niederdruckkolbenfläche 23. Diese zunehmende Druckkraft wirkt der Regelfederkraft der Niederdruckkolbenfeder 22 entgegen und das Hochdruckventil 25 schließt sich, wenn der gewünschte Sprühdruck erreicht ist. Durch Entnahme der gebildeten Creme bzw. des Sprühmediums 4 vergrößert sich das für das Gas zur Verfügung stehende Volumen im Geräteinnenraum 7, wodurch der Ausgangsdruck bzw. der Gasdruck, der auf die Niederdruckkolbenfläche 23 ausgeübt wird, sinkt. Die Regelfederkraft des Niederdruckventils ist ab einem gewissen Punkt stärker als die durch das Gas auf die Niederdruckkolbenfläche 23 ausgeübte Druckkraft, und der Niederdruckkolben 21 öffnet das Hochdruckventil 25, indem der Hochdruckventilstößel 26 in Strömungsrichtung gesehen nach hinten gedrückt wird.

Das Hochdruckventil 25 und die zusätzliche Niederdruckkolbenfläche 52 sind miteinander fluidisch verbunden, beispielsweise über einen Kanal, sodass bei offenem Hochdruckventil 25 der Gasdruck, der letztlich auch im Geräteinnenraum 7 herrscht, auf die zusätzliche Niederdruckkolbenfläche 52 wirkt. Zur fluidischen Verbindung zwischen dem Hochdruckventil 25 und der zusätzlichen Niederdruckkolbenfläche 52 sind im Ausführungsbeispiel der Fig. 6 zwei Radialbohrungen 56, 56' sowie eine die Radialbohrungen 56, 56' verbindende Nut 57 im Reglerkern 58 vorgesehen. Die Nut 57 wird durch das Reglergehäuse 59 nach außen hin abgedichtet. Dies ermöglicht einen Gasfluss zwischen der zusätzlichen Niederdruckkolbenfläche 52 und dem Hochdruckventil 25. Es sei bemerkt, dass die Nut 57 weder mit der Nut 60 identisch ist noch mit dieser in fluidischer Verbindung steht.

Die auf die zusätzliche Niederdruckkolbenfläche 52 wirkende Druckkraft des Gases wirkt der Regelfederkraft der zusätzlichen Niederdruckkolbenfeder 51 entgegen, und das zusätzliche Hochdruckventil 53 schließt sich, wenn ein bestimmter Druck erreicht ist. Dieser bestimmte Druck ist typischerweise geringfügig größer als, vorzugsweise gleich groß wie der Sprühdruck. Bei niedrigerem Gasdruck ist die Federkraft der zusätzlichen Niederdruckkolbenfeder 51 ab einem gewissen Punkt stärker als die durch den Gasdruck auf die Niederdruckkolbenfläche 52 resultierende Kraft, und der zusätzliche Niederdruckkolben 50 öffnet das zusätzliche Hochdruckventil 53.

Bei einer Entnahme des Sprühmediums 4 bzw. der gebildeten Creme durch Versprühen und offenem Hochdruckventil 25 schließt und öffnet das zusätzliche Hochdruckventil 53 ebenfalls ständig, um die Kräfte auszugleichen und damit den Ausgangsdruck konstant zu halten, wodurch im Zusammenspiel mit dem Druckregler 14 eine äußerst genaue Druckregelung auf den gewünschten Sprühdruck gewährleistet ist.

Darüber hinaus ist es möglich, dass der Kapselhalter 12 eine mechanische Arretierung aufweist, mit welcher der Kapselhalter 12 fixierbar ist, sowie dass der Entnahmekolben 35 zur einfacheren Reinigung der Vorrichtung 1 demontierbar ausgebildet ist.

### BEZUGSZEICHENLISTE

- 1: Vorrichtung
- 2: Flaschenisolierung
- 3: Flasche
- 3a: obere Flaschenhälfte mit Gewinde
- 3b: untere Flaschenhälfte
- 4: Sprühmedium
- 5: Kopf
- 6: Kopfdichtung
- 7: Geräteinnenraum
- 8: Kapsel
- 9: Kapselkappe
- 10: Kapselhals
- 11: Kapseldichtung
- 12: Kapselhalter
- 13: Kapselhalterabdeckung
- 14: Druckregler
- 15: Kapselöffnungseinheit
- 16: Stift
- 17: Rückschlagventil
- 18: Rückschlagventilträger
- 19: Rückschlagventilträgerbohrung
- 20: Rückschlagventilbohrung
- 21: Niederdruckkolben
- 22: Niederdruckkolbenfeder
- 23: Niederdruckkolbenfläche
- 24: Anschlagfläche
- 25: Hochdruckventil
- 26: Hochdruckventilstößel
- 27: Hochdruckventilfeder
- 28: Druckbegrenzungsventil
- 29: Druckbegrenzungsventilkolben
- 30: Druckbegrenzungsventilkolbenfläche
- 31: Dichtkegel
- 32: Eingangsbohrung
- 33: Ausgangsbohrung
- 34: Überdruckventilstößel
- 35: Entnahmekolben
- 36: Kolbenbohrung
- 37: Betätigungselement (Hebel, Druckknopf, u.dgl.)
- 38: Hebelfeder
- 39: Achsstift
- 40: untere Düsenverschraubung
- 41: obere Düsenverschraubung
- 42: Dichtung des Entnahmekolbens 35
- 43: Dichtbett
- 44: Austragungsbohrung
- 45: Düse
- 46: Druckregler-Gehäusebohrung
- 47: Filter
- 48: stirnseitige Teilfläche des Druckbegrenzungsventilkolbens
- 50: zusätzlicher Niederdruckkolben
- 51: zusätzliche Niederdruckkolbenfeder
- 52: zusätzliche Niederdruckkolbenfläche
- 53: zusätzliches Hochdruckventil
- 54: zusätzlicher Hochdruckventilstößel
- 55: zusätzliche Hochdruckventilfeder
- 56, 56': Radialbohrung
- 57: Nut, die die Radialbohrungen 56, 56' fluidisch verbindet
- 58: Reglerkern
- 59: Reglergehäuse
- 60: Nut, die die Ausgangsbohrung 33 mit der Druckregler-Gehäusebohrung 46 bzw. der Rückschlagventilträgerbohrung 19 fluidisch verbindet
- 61: Block
- 62: Volumen zwischen dem Block 61 und dem Druckbegrenzungsventilkolben 29, welches abschnittsweise durch die Teilfläche 48 begrenzt ist

## Patentansprüche

1. Vorrichtung, (1) zum Austragen von Fluiden, die Vorrichtung (1) umfassend:
ein zu öffnendes und zu verschließendes Behältnis (3, 5), welches einen Geräteinnenraum (7) zur Aufnahme eines Sprühmediums (4) ausbildet;
Kapselverbindungsmittel (12, 15), um eine fluidische Verbindung zwischen einer auswechselbaren, mit Gas gefüllten Kapsel (8) und der Vorrichtung (1) herzustellen;
eine Austragungsöffnung (44), durch welche das Sprühmedium (4) bei Betätigung der Vorrichtung (1) aus dem Geräteinnenraum (7) austragbar ist, wobei ein Druckregler (14) vorgesehen ist, um das Austragen des Sprühmediums (4) mit gleichmäßigem Druck zu gewährleisten, **dadurch gekennzeichnet, dass** der Druckregler (14) einen Niederdruckkolben (21) mit einer Niederdruckkolbenfeder (22) und einer Niederdruckkolbenfläche (23) sowie ein Hochdruckventil (25) mit einem Hochdruckventilstößel (26) und einer Hochdruckventilfeder (27) umfasst, wobei mittels des Gases aus der Kapsel (8) ein derartiger Druck auf die Niederdruckkolbenfläche (23) aufbringbar ist, dass die Niederdruckkolbenfeder (22) zusammengedrückt und das Hochdruckventil (25) geschlossen wird, und dass der Druckregler (14) ein Druckbegrenzungsventil (28) umfasst, welches einen Druckbegrenzungsventilkolben (29) mit einer Druckbegrenzungsventilkolbenfläche (30) und vorzugsweise einen Dichtkegel (31) aufweist.

2. Vorrichtung nach Anspruch 1, **dadurch gekennzeichnet, dass** zwischen den Kapselverbindungsmitteln (12, 15) und dem Geräteinnenraum (7), vorzugsweise im Bereich des Geräteinnenraums (7) ein Rückschlagventil (17) vorgesehen ist, um einen sicheren Gasfluss in einer Strömungsrichtung von der Kapsel (8) zum Geräteinnenraum (7) zu gewährleisten.

3. Vorrichtung nach Anspruch 2, **dadurch gekennzeichnet, dass** der Druckregler (14) zwischen den Kapselverbindungsmitteln (12, 15) und dem Rückschlagventil (17) angeordnet ist.

4. Vorrichtung (1) nach einem der Ansprüche 1 bis 3, **dadurch gekennzeichnet, dass** das Behältnis (3, 5) zumindest abschnittsweise von einer thermischen Isolierung (2) umgeben ist.

5. Vorrichtung (1) einem der Ansprüche 1 bis 4, **dadurch gekennzeichnet, dass** die Vorrichtung (1) ein Überdruckventil umfasst, welches dem Druckregler (14) nachgeordnet ist.

6. Vorrichtung (1) nach einem der Ansprüche 1 bis 5, **dadurch gekennzeichnet, dass** ein zusätzliches Rückschlagventil vorgesehen ist, welches zwischen den Kapselverbindungsmitteln (12, 15) und dem Druckregler (14) angeordnet ist.

7. Vorrichtung (1) nach einem der Ansprüche 1 bis 6, **dadurch gekennzeichnet, dass** die Vorrichtung (1) einen zweiten Druckregler umfasst, wobei der zweite Druckregler dem ersten Druckregler (14) vorgeschaltet ist.

8. Vorrichtung nach Anspruch 7, **dadurch gekennzeichnet, dass** der zweite Druckregler einen zusätzlichen Niederdruckkolben (50) mit einer zusätzlichen Niederdruckkolbenfeder (51) und einer zusätzlichen Niederdruckkolbenfläche (52) sowie ein zusätzliches Hochdruckventil (53) mit einem zusätzlichen Hochdruckventilstößel (54) und einer zusätzlichen Hochdruckventilfeder (55) umfasst, wobei mittels des Gases aus der Kapsel (8) ein derartiger Druck auf die zusätzliche Niederdruckkolbenfläche (52) aufbringbar ist, dass die zusätzliche Niederdruckkolbenfeder (51) zusammengedrückt und das zusätzliche Hochdruckventil (53) geschlossen wird.

9. Vorrichtung (1) nach einem der Ansprüche 1 bis 8, **dadurch gekennzeichnet, dass** mindestens ein Düsenverbindungsmittel (40, 41) zur Herstellung einer fluidischen Verbindung zwischen einer austauschbaren Düse (45) und der Austragungsöffnung (44) vorgesehen ist.

10. Vorrichtung (1) nach Anspruch 9, **dadurch gekennzeichnet, dass** das mindestens eine Düsenverbindungsmittel eine untere Düsenverschraubung (40) und/oder eine obere Düsenverschraubung (41) umfasst, welche entlang der Austragungsöffnung (44) angeordnet sind, wobei vorzugsweise in der oberen Düsenverschraubung (41) eine austauschbare Düse (45) angeordnet ist.

11. System umfassend eine Vorrichtung (1) nach einem der Ansprüche 1 bis 10 sowie die mit Gas gefüllte Kapsel (8).

12. System (1) nach Anspruch 11, **dadurch gekennzeichnet, dass** das Gas Argon ist.

13. System nach einem der Ansprüche 11 bis 12, **dadurch gekennzeichnet, dass** die Kapsel (8) in fluidischer Verbindung mit der Vorrichtung (1) steht.

## Claims

1. A device (1) for discharging fluids, the device (1) comprising:
a container (3, 5) to be opened and closed, which forms a device interior space (7) for accommodating a spray medium (4) ;
capsule connection means (12, 15) for establishing a fluidic connection between an exchangeable gas-filled capsule (8) and the device (1);
a discharge opening (44) through which the spray medium (4) can be discharged from the device interior space (7) upon actuating the device (1), wherein a pressure regulator (14) is provided to ensure the discharge of the spray medium (4) at a uniform pressure, **characterized in that** the pressure regulator (14) comprises a low-pressure piston (21) with a low-pressure piston spring (22) and a low-pressure piston surface (23), as well as a high-pressure valve (25) with a high-pressure valve plunger (26) and a high-pressure valve spring (27), wherein such a pressure can be applied to the low-pressure piston surface (23) by means of the gas from the capsule (8) that the low-pressure piston spring (22) is compressed and the high-pressure valve (25) is closed, and that the pressure regulator (14) comprises a pressure relief valve (28), which comprises a pressure relief valve piston (29) with a pressure relief valve piston surface (30) and preferably a sealing cone (31).

2. A device according to claim 1, **characterized in that** a check valve (17) is provided between the capsule connection means (12, 15) and the device interior space (7), preferably in the region of the device interior space (7), in order to ensure a secure gas flow in a flow direction from the capsule (8) to the device interior space (7).

3. A device according to claim 2, **characterized in that** the pressure regulator (14) is arranged between the capsule connection means (12, 15) and the check valve (17).

4. A device (1) according to one of the claims 1 to 3, **characterized in that** the container (3, 5) is surrounded by a thermal insulation (2) at least sectionally.

5. A device (1) according to one of the claims 1 to 4, **characterized in that** the device (1) comprises an overpressure valve, which is arranged downstream of the pressure regulator (14).

6. A device (1) according to one of the claims 1 to 5, **characterized in that** an additional check valve is provided, which is arranged between the capsule connection means (12, 15) and the pressure regulator (14).

7. A device (1) according to one of the claims 1 to 6, **characterized in that** the device (1) comprises a second pressure regulator, wherein the second pressure regulator is connected upstream of the first pressure regulator (14).

8. A device according to claim 7, **characterized in that** the second pressure regulator comprises an additional low-pressure piston (50) with an additional low-pressure piston spring (51) and an additional low-pressure piston surface (52), as well as an additional high-pressure valve (53) with an additional high-pressure valve plunger (54) and an additional high-pressure valve spring (55), wherein such a pressure can be applied to the additional low-pressure piston surface (52) by means of the gas from the capsule (8) that the additional low-pressure piston spring (51) is compressed and the additional high-pressure valve (53) is closed.

9. A device (1) according to one of the claims 1 to 8, **characterized in that** at least one nozzle connection means (40, 41) for establishing a fluidic connection between an exchangeable nozzle (45) and the discharge opening (44) is provided.

10. A device (1) according to claim 9, **characterized in that** the at least one nozzle connection means comprises a lower nozzle fitting (40) and/or an upper nozzle fitting (41), which are arranged along the discharge opening (44), wherein an exchangeable nozzle (45) is arranged preferably in the upper nozzle fitting (41).

11. A system comprising a device (1) according to one of the claims 1 to 10 as well as the gas-filled capsule (8).

12. A system (1) according to claim 11, **characterized in that** the gas is argon.

13. A system according to one of the claims 11 to 12, **characterized in that** the capsule (8) is in fluidic connection with the device (1).

## Revendications

1. Dispositif (1) pour le soutirage de fluides, lequel dispositif (1) comprend :
un récipient (3, 5) qui peut s'ouvrir et se fermer et qui forme un espace intérieur d'appareil (7) pour recevoir un produit à pulvériser (4) ;
des moyens de communication avec une capsule (12, 15) pour établir une communication de fluide entre une capsule (8) interchangeable remplie de gaz et le dispositif (1) ;
une ouverture de soutirage (44) à travers laquelle le produit à pulvériser (4) peut être soutiré de l'espace intérieur d'appareil (7) lors de l'actionnement du dispositif (1), un régulateur de pression (14) étant prévu pour garantir le soutirage du produit à pulvériser (4) sous une pression uniforme,
**caractérisé en ce que** le régulateur de pression (14) comprend un piston à basse pression (21) avec un ressort de piston à basse pression (22) et une surface de piston à basse pression (23) ainsi qu'une soupape à haute pression (25) avec un poussoir de soupape à haute pression (26) et un ressort de soupape à haute pression (27), une pression telle que le ressort de piston à basse pression (22) est comprimé et la soupape à haute pression (25) fermée pouvant être exercée au moyen du gaz sortant de la capsule (8) sur la surface de piston à basse pression (23), et **en ce que** le régulateur de pression (14) comprend une soupape de limitation de pression (28) qui comprend un piston de soupape de limitation de pression (29) avec une surface de piston de soupape de limitation de pression (30) et de préférence un cône d'étanchéité (31).

2. Dispositif selon la revendication 1, **caractérisé en ce qu'**une soupape antiretour (17) est prévue entre les moyens de communication avec une capsule (12, 15) et l'espace intérieur d'appareil (7), de préférence au niveau de l'espace intérieur d'appareil (7), afin de garantir un flux de gaz stable dans un sens d'écoulement allant de la capsule (8) vers l'espace intérieur d'appareil (7).

3. Dispositif selon la revendication 2, **caractérisé en ce que** le régulateur de pression (14) est disposé entre les moyens de communication avec une capsule (12, 15) et la soupape antiretour (17).

4. Dispositif (1) selon l'une des revendications 1 à 3, **caractérisé en ce que** le récipient (3, 5) est entouré au moins en partie par une isolation thermique (2).

5. Dispositif (1) selon l'une des revendications 1 à 4, **caractérisé en ce que** le dispositif (1) comprend une soupape de surpression qui est montée après le régulateur de pression (14).

6. Dispositif (1) selon l'une des revendications 1 à 5, **caractérisé en ce qu'**il est prévu une soupape antiretour supplémentaire, qui est disposée entre les moyens de communication avec une capsule (12, 15) et le régulateur de pression (14).

7. Dispositif (1) selon l'une des revendications 1 à 6, **caractérisé en ce que** le dispositif (1) comprend un deuxième régulateur de pression, lequel deuxième régulateur de pression est monté en amont du premier régulateur de pression (14).

8. Dispositif selon la revendication 7, **caractérisé en ce que** le deuxième régulateur de pression comprend un piston à basse pression supplémentaire (50) avec un ressort de piston à basse pression supplémentaire (51) et une surface de piston à basse pression supplémentaire (52) ainsi qu'une soupape à haute pression supplémentaire (53) avec un poussoir de soupape à haute pression supplémentaire (54) et un ressort de soupape à haute pression supplémentaire (55), le gaz qui sort de la capsule (8) pouvant exercer sur la surface de piston à basse pression supplémentaire (52) une pression telle que le ressort de piston à basse pression supplémentaire (51) soit comprimé et que la soupape à haute pression supplémentaire (53) soit fermée.

9. Dispositif (1) selon l'une des revendications 1 à 8, **caractérisé en ce qu'**au moins un moyen de communication avec une buse (40, 41) est prévu pour établir une communication de fluide entre une buse (45) interchangeable et l'ouverture de soutirage (44).

10. Dispositif (1) selon la revendication 9, **caractérisé en ce que** l'au moins un moyen de communication avec une buse comprend un raccord fileté de buse inférieur (40) et/ou un raccord fileté de buse supérieur (41) qui sont disposés le long de l'ouverture de soutirage (44), une buse interchangeable (45) étant disposée de préférence dans le raccord fileté de buse supérieur (41).

11. Système comprenant une dispositif (1) selon l'une des revendications 1 à 10 ainsi qu'une capsule (8) remplie de gaz.

12. Système (1) selon la revendication 11, **caractérisé en ce que** le gaz est de l'argon.

13. Système selon l'une des revendications 11 à 12, **caractérisé en ce que** la capsule (8) est en communication de fluide avec le dispositif (1).
